# EUROPEAN PATENT APPLICATION

(11) **EP 4 262 108 A1**
(43) Date of publication of application: **18.10.2023**
(21) Application number: 22752173.9
(22) Date of filing: 28.01.2022
(51) Int. Cl.: H04B 10/291, G02B 6/28

(54) **OPTICAL COUPLER, COMMUNICATION METHOD AND COMMUNICATION SYSTEM**

(30) Priority: 10.02.2021 CN 202110185292
(71) Applicant: Huawei Technologies Co., Ltd., Shenzhen, Guangdong 518129 (CN)
(72) Inventor: HUANG, Yuanda, Shenzhen, Guangdong 518129 (CN); ZHANG, Xin, Shenzhen, Guangdong 518129 (CN); CHANG, Tianhai, Shenzhen, Guangdong 518129 (CN)
(74) Representative: Pfenning, Meinig & Partner mbB
(86) International application number: PCT/CN2022/074717
(87) International publication number: WO 2022/171012

(57) **Abstract**

This application discloses an optical coupler, a communication method, and a communication system, and belongs to the communication field. The communication system includes N transmitters, M receivers, and an optical coupler, where both N and M are positive integers greater than 1. Each of the N transmitters is configured to send one first optical signal to the optical coupler. The optical coupler is configured to couple N first optical signals sent by the N transmitters into one second optical signal, and broadcast the second optical signal to the M receivers. Each of the M receivers is configured to receive the second optical signal sent by the optical coupler, and demodulate the second optical signal. In this application, a communication delay in the communication system can be reduced.

## Description

This application claims priority to Chinese Patent Application No. 202110185292.0, filed on February 10, 2021 and entitled "OPTICAL COUPLER, COMMUNICATION METHOD, AND COMMUNICATION SYSTEM", which is incorporated herein by reference in its entirety.

### TECHNICAL FIELD

This application relates to the communication field, and in particular, to an optical coupler, a communication method, and a communication system.

### BACKGROUND

A current communication system includes a plurality of communication nodes and a plurality of levels of switches. When any two communication nodes communicate with each other, data sent by a transmitter of a source communication node is transmitted to a switch of a destination communication node via at least one switch.

If the communication node is connected to the switch through an optical fiber, each time an optical signal that carries data and that is sent by the transmitter passes through one switch, the switch needs to convert the received optical signal into an electrical signal through one time of optical-to-electrical conversion, then convert the electrical signal into an optical signal through one time of electrical-to-optical conversion for sending. Consequently, a large communication delay between communication nodes is caused.

### SUMMARY

Embodiments of this application provide an optical coupler, a communication method, and a communication system, to reduce a communication delay in the communication system. The technical solutions are as follows.

According to a first aspect, this application provides a communication system. For example, the communication system is an in-vehicle communication system, a data center system, an internet of things system, or an industrial interconnection system. The communication system includes N transmitters, M receivers, and an optical coupler, where both N and M are positive integers greater than 1. Each of the N transmitters is configured to send one first optical signal to the optical coupler. The optical coupler is configured to couple N first optical signals sent by the N transmitters into one second optical signal, and broadcast the second optical signal to the M receivers. Each of the M receivers is configured to receive the second optical signal sent by the optical coupler and demodulate the second optical signal.

In the communication system provided in embodiments of this application, the N transmitters and the M receivers communicate with each other via the optical coupler. The optical coupler is configured to couple first optical signals sent by the transmitters into one second optical signal, and broadcast the second optical signal to the M receivers. In this way, the optical coupler can implement communication between the transmitter and the receiver without performing optical-to-electrical conversion processing. In comparison with a switch, a communication delay can be effectively reduced. In addition, only one hop of optical coupler is needed for data transmission between the transmitter and the receiver. Therefore, this can further reduce the communication delay, improve a transmission capacity of the communication system, and reduce communication power consumption.

The foregoing optical coupler may have a plurality of implementations. The following uses three types of optical couplers as an example for description. In a first implementation, the optical coupler is an N×M optical coupler including N input ports and M output ports. In a second implementation, the optical coupler includes: an N×1 optical subcoupler including N input ports and one output port and a 1×M optical subcoupler including one input port and M output ports, and the output port of the N×1 optical subcoupler is connected to the input port of the 1×M optical subcoupler. In a third implementation, the optical coupler includes: T S×1 optical subcouplers including S input ports and one output port, one T×1 optical subcoupler including T input ports and one output port, one 1×Q optical subcoupler including one input port and Q output ports, and Q1×P optical subcouplers including one input port and P output ports. T, S, Q, and P are all positive integers, N=S×T, and M=Q×P. Output ports of the T S×1 optical subcouplers are respectively connected to the T input ports of the T×1 optical subcouplers. The output port of the T×1 optical subcoupler is connected to the input port of the 1×Q optical subcoupler. The Q output ports of the 1×Q optical subcoupler are respectively connected to input ports of the Q 1×P optical subcouplers.

When the cascaded optical coupler described in the second or the third optional implementation is deployed in the communication system, during use of the communication system, quantities of input ports and output ports of the optical coupler may further be adjusted based on an actual situation by adding a cascaded optical subcoupler or removing a cascaded optical subcoupler, to adapt to different requirements on quantities of input ports and output ports in different periods, so as to implement dynamic adjustment for the quantity of ports.

In the second optional implementation and the third optional implementation, because the optical coupler is formed by cascading a plurality of sub-couplers, an insertion loss exists between the connected sub-couplers, affecting a transmission effect of an optical signal inside the optical coupler. Optionally, in the optical coupler, an optical amplifier may be connected in series between at least one pair of connected optical subcouplers. For example, an optical amplifier may be connected in series between each pair of connected optical subcouplers. By disposing the optical amplifier, compensation for the insertion loss between the cascaded optical subcouplers can be implemented, thereby ensuring a communication effect.

An optical amplifier is disposed between the optical coupler and at least one transmitter, to compensate for an insertion loss between the optical coupler and the transmitter. For example, an optical amplifier is disposed between the optical coupler and each transmitter. An optical amplifier is disposed between the optical coupler and at least one receiver, to compensate for an insertion loss between the optical coupler and the receiver. For example, an optical amplifier is disposed between the optical coupler and each receiver. For example, the optical amplifier is a Raman amplifier, an erbium-doped fiber amplifier (Erbium Doped Fiber Amplifier, EDFA), a silicon optical amplifier (Silicon Optical Amplifier, SOA), or an optical fiber amplifier (Optical Fiber Amplifier, OFA). In an example, the optical coupler is a passive optical coupler. The passive coupler can implement optical signal transmission with low costs and low power consumption, to reduce overall manufacturing costs of the communication system.

Optionally, the communication system further includes a first light source pool shared by the N transmitters. Each of the transmitters is further configured to perform modulation using an optical signal provided by the first light source pool, to obtain the first optical signal. In this application, the first light source pool is shared, to implement centralized management and maintenance of light sources, facilitating to provide timely fault diagnosis in the occurrence of fault in the light sources. This reduces use and maintenance costs of the light sources and also improves security and reliability of the light sources. In addition, the first light source pool may include one or more light sources, and the light sources included in the first light source pool may be packaged in an integrated manner. For example, the light sources may be packaged into an optical chip or an optical module capable of transmitting one or more optical signals. In this way, manufacturing costs can be reduced. Further, if a quantity of light sources included in the first light source pool is less than N, in comparison with a case in which one light source is disposed for each transmitter, a quantity of light sources used by the transmitters in the communication system can be reduced, reducing use costs.

Optionally, the communication system is a coherent communication system, and the communication system further includes a second light source pool shared by the M receivers. Each of the receivers is further configured to perform signal demodulation on the second optical signal using an optical signal provided by the second light source pool. In this application, the second light source pool is shared, to implement centralized management and maintenance of light sources, facilitating to provide timely fault diagnosis in the occurrence of fault in the light sources. This reduces use and maintenance costs of the light sources and also improves security and reliability of the light sources. In addition, the second light source pool may include one or more light sources, and the light sources included in the second light source pool may be packaged in an integrated manner, for example, packaged into an optical chip or an optical module capable of transmitting one or more optical signals. In this way, manufacturing costs can be reduced. Further, if a quantity of light sources included in the second light source pool is less than M, in comparison with a case in which one light source is disposed for each receiver, a quantity of light sources used by the receivers in the communication system can be reduced, reducing use costs.

In an optional implementation, the communication system is a direct modulation direct detection system. Wavelengths of the first optical signals sent by the N transmitters are different from each other, or the N first optical signals are all wide-spectrum optical signals. In this way, a case of coherence cancellation between the N first optical signals can be avoided.

In embodiments of this application, in the N transmitters, original data carried in first optical signals sent by different transmitters is corresponding to different electrical physical resources. Each of the receivers is configured to obtain, from original data carried in the second optical signal, original data corresponding to an electrical physical resource corresponding to the receiver. In this way, point-to-multipoint or multipoint-to-multipoint communication between the transmitter and the receiver can be implemented. Original data carried in any optical signal is data modulated on the optical signal, for example, bit information carried in the optical signal. The original data carried in the first optical signal and the second optical signal comes from a signal source of the transmitter, the signal source may output an electrical signal, and the electrical signal may be an analog signal or a digital signal.

In a first implementation, the electrical physical resource is a subcarrier. The original data is a digital signal. The transmitter and receiver communicate with each other based on a frequency division multiple access (frequency division multiple access, FDMA) principle. Each of the transmitters is further configured to generate, after mapping the digital signal to a subcarrier corresponding to the transmitter, the first optical signal based on an analog signal converted from the digital signal mapped to the subcarrier. Different transmitters in the N transmitters correspond to different subcarriers, and any two subcarriers are orthogonal. Each of the receivers is further configured to convert the second optical signal into an analog signal, convert the analog signal into a digital signal, where the digital signal includes N digital signals mapped to the subcarriers, and obtain a digital signal on a subcarrier corresponding to the receiver, to obtain original data. The mapping the digital signal to a corresponding subcarrier means to multiplying the digital signal by the subcarrier.

In a second implementation, the electrical physical resource is a spreading code. The original data is a digital signal. The transmitter and receiver communicate with each other based on a code division multiple access (Code Division Multiple Access, CDMA) principle. Each transmitter is further configured to encode the digital signal into a spreading digital signal using a spreading code corresponding to the transmitter, and generate the first optical signal based on an analog signal converted from the spreading digital signal. Spreading codes corresponding to the N transmitters are different, and any two spreading codes are orthogonal. Each of the receivers is further configured to convert the second optical signal into an analog signal, convert the analog signal into a digital signal, where the digital signal includes N spreading digital signals, and decode the digital signal using a spreading code corresponding to the receiver to obtain a decoded digital signal, so as to obtain original data.

It should be noted that the original data may alternatively be an analog signal. If the original data is an analog signal, each transmitter may first convert the received analog signal into a digital signal, and then process the digital signal. For the processing manner, refer to the processing manners in the foregoing two implementations.

According to a second aspect, this application provides an optical coupler, including a coupling structure and a broadcast structure. The coupling structure is configured to be connected to N transmitters through an optical fiber, and the coupling structure is configured to couple N first optical signals sent by the N transmitters into one second optical signal, where N is a positive integer greater than 1. The broadcast structure is configured to be connected to M receivers through an optical fiber, and the broadcast structure is configured to broadcast the second optical signal to the M receivers, where M is a positive integer greater than 1.

In the optical coupler provided in embodiments of this application, the coupling structure is configured to couple first optical signals sent by the transmitters into one second optical signal. The broadcast structure is configured to broadcast the second optical signal to the M receivers. In this way, communication between the N transmitters and the M receivers is implemented. In this way, the optical coupler can implement communication between the transmitter and the receiver without performing optical-to-electrical conversion processing, and a communication delay can be effectively reduced in comparison with a switch.

The foregoing optical coupler may have a plurality of implementations. The following uses three types of optical couplers as an example for description. In a first implementation, the optical coupler is an N×M optical coupler including N input ports and M output ports. In a second implementation, the coupling structure is an N×1 optical subcoupler including N input ports and one output port. The broadcast structure is a 1×M optical subcoupler including one input port and M output ports. The output port of the N×1 optical subcoupler is connected to the input port of the 1×M optical subcoupler. In a third implementation, the coupling structure includes T S×1 optical subcouplers including S input ports and one output port, and one T×1 optical subcoupler including T input ports and one output port. The broadcast structure includes one 1×Q optical subcoupler including one input port and Q output ports, and Q 1×P optical subcouplers including one input port and P output ports. T, S, Q, and P are all positive integers, N=S×T, and M=Q×P. Output ports of the T S×1 optical subcouplers are respectively connected to the T input ports of the T×1 optical subcouplers. The output port of the T×1 optical subcoupler is connected to the input port of the 1×Q optical subcoupler. The Q output ports of the 1×Q optical subcoupler are respectively connected to input ports of the Q 1×P optical subcouplers.

For example, an optical amplifier is connected in series between at least one pair of connected optical subcouplers. Optionally, the optical amplifier is a Raman amplifier, an erbium-doped fiber amplifier, a silicon optical amplifier, or a fiber amplifier. In an implementation, the optical coupler is a passive optical coupler.

For a structure and effects of the optical coupler provided in the second aspect, refer to related content in the first aspect.

According to a third aspect, this application provides a communication method. The method includes: Each of N transmitters sends one first optical signal to an optical coupler, where N is a positive integer greater than 1. The optical coupler couples N first optical signals sent by the N transmitters into one second optical signal, and broadcasts the second optical signal to M receivers, where M is a positive integer greater than 1. Each of the M receivers demodulates the second optical signal after receiving the second optical signal sent by the optical coupler.

According to the communication method provided in embodiments of this application, the optical coupler couples first optical signals sent by the transmitters into one second optical signal, and broadcasts the second optical signal to the M receivers. In this way, communication between the N transmitters and the M receivers is implemented. In this way, the optical coupler can implement communication between the transmitter and the receiver without performing optical-to-electrical conversion processing, and a communication delay can be effectively reduced in comparison with a switch.

In an optional implementation, a process in which each of the N transmitters obtains one first optical signal includes: Each of the transmitters performs modulation using an optical signal provided by a first light source pool, to obtain the first optical signal, where the first light source pool is a light source pool shared by the N transmitters. In another optional implementation, the demodulating the second optical signal includes: Each of the receivers performs demodulation on the second optical signal using an optical signal provided by a second light source pool, where the second light source pool is a light source pool shared by the M receivers. For example, each of the transmitters obtains the first optical signal by performing intensity modulation on an optical signal. Wavelengths of the first optical signals sent by the N transmitters are different from each other, or the first optical signals are wide-spectrum optical signals.

In an optional implementation, in the N transmitters, original data carried in first optical signals sent by different transmitters is corresponding to different electrical physical resources. A process of the demodulating the second optical signal includes: Each of the receivers obtains, from original data carried in the second optical signal, original data corresponding to an electrical physical resource corresponding to the receiver.

In an example, the electrical physical resource is a subcarrier, and the original data is a digital signal (in other words, the original data is presented as a digital signal). A process in which each of the transmitters obtains one first optical signal includes: Each of the transmitters generates, after mapping the digital signal to a subcarrier corresponding to the transmitter, the first optical signal based on an analog signal converted from the digital signal mapped to the subcarrier. Different transmitters in the N transmitters correspond to different subcarriers, and any two subcarriers are orthogonal. That each of the receivers obtains, from original data carried in the second optical signal, original data corresponding to an electrical physical resource corresponding to the receiver includes: Each of the receivers converts the second optical signal into an analog signal, converts the analog signal into a digital signal, where the digital signal includes N digital signals mapped to the subcarrier, and obtains a digital signal on a subcarrier corresponding to the receiver. In another example, the electrical physical resource is a spreading code, the original data is a digital signal (in other words, the original data is presented as a digital signal). A process in which each of the transmitters obtains one first optical signal includes: Each of the transmitters encodes the digital signal into a spreading digital signal using a spreading code corresponding to the transmitter, and generates the first optical signal based on an analog signal converted from the spreading digital signal. Spreading codes corresponding to the N transmitters are different, and any two spreading codes are orthogonal. That each of the receivers obtains, from original data carried in the second optical signal, original data corresponding to an electrical physical resource corresponding to the receiver includes: Each of the receivers converts the second optical signal into an analog signal, where the digital signal includes N spreading digital signal, converts the analog signal into a digital signal, and decodes the digital signal using a spreading code corresponding to the receiver, to obtain a decoded digital signal.

It should be noted that the original data may alternatively be an analog signal. If the original data is an analog signal, each transmitter may first convert the received analog signal into a digital signal, and then process the digital signal. For the processing manner, refer to the processing manners in the foregoing two examples.

According to a fourth aspect, this application provides a communication method, including: receiving one first optical signal sent by each of N transmitters, where N is a positive integer greater than 1; coupling N first optical signals sent by the N transmitters into one second optical signal; and broadcasting the second optical signal to M receivers, where M is a positive integer greater than 1.

According to the communication method provided in embodiments of this application, the N transmitters and the M receivers communicate through an optical coupler. The optical coupler couples first optical signals sent by the transmitters into one second optical signal, and then broadcasts the second optical signal to the M receivers. In this way, the optical coupler can implement communication between the transmitter and the receiver without performing optical-to-electrical conversion processing, and a communication delay can be effectively reduced in comparison with a switch.

According to a fifth aspect, this application provides a communication apparatus, including at least one module. The at least one module may be configured to implement the communication method provided in the third aspect or the possible implementations of the third aspect.

According to a sixth aspect, this application provides a communication apparatus, including at least one module. The at least one module may be configured to implement the communication method provided in the fourth aspect or the possible implementations of the fourth aspect. For example, the communication apparatus includes: a receiving module, configured to receive one first optical signal sent by each of N transmitters, where N is a positive integer greater than 1; a coupling module, configured to couple N first optical signals sent by the N transmitters into one second optical signal; and a sending module, configured to broadcast the second optical signal to M receivers, where M is a positive integer greater than 1.

In the communication system provided in embodiments of this application, the N transmitters and the M receivers communicate with each other via the optical coupler. The optical coupler is configured to couple first optical signals sent by the transmitters into one second optical signal, and broadcast the second optical signal to the M receivers. In this way, the optical coupler can implement communication between the transmitter and the receiver without performing optical-to-electrical conversion processing, and a communication delay can be effectively reduced in comparison with a switch. In addition, data transmission between the transmitter and the receiver needs only one time of electrical-to-optical conversion and one time of optical-to-electrical conversion. Because quantities of electrical-to-optical conversions and optical-to-electrical conversions are small, communication power consumption can be reduced, and a transmission capacity of the communication system can be improved. In addition, one-hop transmission is implemented for a signal between the transmitter and the receiver via one hop of optical coupler, further reducing the communication delay.

### BRIEF DESCRIPTION OF DRAWINGS

FIG. 1 is a schematic diagram of a structure of a communication system according to an embodiment of this application;
FIG. 2 is a schematic diagram of a structure of an optical coupler according to an embodiment of this application;
FIG. 3 is a schematic diagram of a structure of another optical coupler according to an embodiment of this application;
FIG. 4 is a schematic diagram of a structure of still another optical coupler according to an embodiment of this application;
FIG. 5 is a schematic diagram of a structure of an optical coupler in which an optical amplifier is disposed according to an embodiment of this application;
FIG. 6 is a schematic diagram of a structure of another optical coupler in which an optical amplifier is disposed according to an embodiment of this application;
FIG. 7 is a schematic diagram of a structure of another communication system according to an embodiment of this application;
FIG. 8 is a schematic diagram of a structure of still another communication system according to an embodiment of this application;
FIG. 9 is a schematic diagram of a communication principle of a communication system according to an embodiment of this application;
FIG. 10 is a schematic diagram of a communication principle of a communication system according to an embodiment of this application;
FIG. 11 is a schematic diagram of a structure of yet another communication system according to an embodiment of this application;
FIG. 12 is a schematic diagram of a structure of an optical coupler according to an embodiment of this application;
FIG. 13 is a schematic flowchart of a communication method according to an embodiment of this application;
FIG. 14 is a schematic flowchart of a communication method according to an embodiment of this application; and
FIG. 15 is a schematic diagram of a structure of a communication apparatus according to an embodiment of this application.

### DESCRIPTION OF EMBODIMENTS

To make principles and technical solutions of this application clearer, the following further describes implementations of this application in detail with reference to the accompanying drawings.

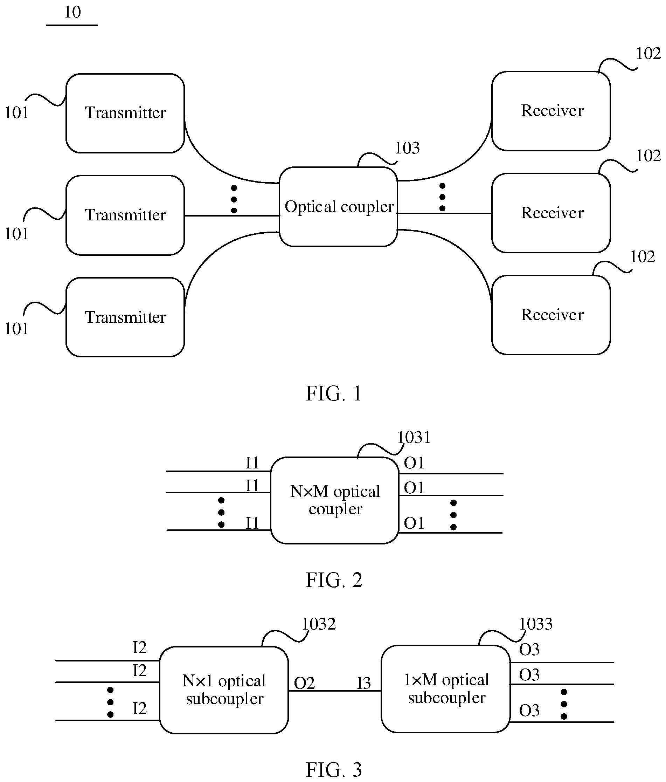

FIG. 1 is a schematic diagram of a structure of a communication system 10 according to an embodiment of this application. As shown in FIG. 1, the communication system 10 includes N transmitters 101, M receivers 102, and an optical coupler (coupler) 103, where N and M are both positive integers greater than 1. Each of the N transmitters 101 is configured to send one first optical signal to the optical coupler 103. The optical coupler 103 is configured to couple N first optical signals sent by the N transmitters 101 into one second optical signal, and broadcast the second optical signal to the M receivers 102. Each of the M receivers 102 is configured to receive the second optical signal sent by the optical coupler 103 and demodulate the second optical signal.

In a conventional communication system, communication nodes communicate with each other via a switch. For each time of communication, a switch needs to perform at least one time of optical-to-electrical conversion and at least one time of electrical-to-optical conversion, resulting in a large communication delay between the communication nodes.

In the communication system provided in embodiments of this application, the N transmitters and the M receivers communicate with each other via the optical coupler. The optical coupler is configured to couple first optical signals sent by the transmitters into one second optical signal, and broadcast the second optical signal to the M receivers. In this way, the optical coupler can implement communication between the transmitter and the receiver without performing optical-to-electrical conversion processing. In comparison with the switch in the conventional communication system, a communication delay can be effectively reduced. In addition, in the conventional communication system, data transmission between a transmitter and a receiver needs to pass through a plurality of hops of switches. However, in the communication system provided in this application, only one hop of optical coupler is needed for data transmission between the transmitter and the receiver. Therefore, the communication delay can further be reduced, a transmission capacity of the communication system can be improved, and communication power consumption can be reduced.

In embodiments of this application, the optical coupler has an optical signal coupling function and an optical signal broadcasting function. The optical signal coupling function means to couple (couple) the N first optical signals into one second optical signal, and specifically includes: coupling power of the N first optical signals and/or coupling wavelengths of the N first optical signals. The coupling power of the N first optical signals means to sum the power of the N first optical signals. The coupling wavelengths of the N first optical signals means to multiplexing (multiplex, also referred to as combining, combine) the wavelengths of the N first optical signals. The optical signal broadcasting function refers to broadcasting the second optical signal to the M receivers, and specifically includes: separately sending the second optical signal that carries same data to the M receivers 102. Power of the second optical signal broadcast to the M receivers may be the same or may be different, but the carried data is the same. During network deployment of the communication system, power equalization may be performed on the optical coupler based on an actual situation, so that the power of the second optical signal broadcast to the M receivers is the same or different. For example, the optical coupler broadcasts the second optical signal in a manner of equal power allocation, so that the power of the second optical signal broadcast to the M receivers is the same. In this way, the optical coupler has a simple structure and is easy to implement. For another example, power of the second optical signal needed by different receivers is determined depending on communication requirements between the optical coupler and the M receivers. The optical coupler broadcasts the second optical signal to the different receivers based on the power needed by the different receivers (for example, the power of the second optical signal is adjusted by adding one or more optical amplifiers to the optical coupler). In this way, flexibility of communication between the optical coupler and the M receivers is high, and a communication effect is good.

The foregoing optical coupler may have a plurality of implementations. FIG. 2 to FIG. 4 are schematic diagrams of structures of three types of optical couplers according to embodiments of this application. The following uses the three types of optical couplers as an example for description.

In a first implementation, as shown in FIG. 2, the optical coupler 103 is an N×M optical coupler 1031 including N input ports I1 and M output ports O1. The N input ports I1 are respectively connected to the N transmitters. The M output ports O1 are respectively connected to the M receivers.

In a second implementation, as shown in FIG. 3, the optical coupler 103 includes: an N×1 optical subcoupler 1032 including N input ports I2 and one output port O2 and a 1×M optical subcoupler 1033 including one input port I3 and M output ports O3. The output port O2 of the N×1 optical subcoupler 1032 is connected to the input port I3 of the 1×M optical subcoupler 1033, and the N×1 optical subcoupler 1032 may also be referred to as an N×1 optical multiplexer or combiner. The N input ports I2 are respectively connected to the N transmitters. The M output ports O3 are respectively connected to the M receivers. The N×1 optical subcoupler 1032 can implement the optical signal coupling function, and the 1×M optical subcoupler 1033 can implement the optical signal broadcasting function.

In a third implementation, the optical coupler 103 includes: T S×1 optical subcouplers 1034 including S input ports I4 and one output port O4, one T×1 optical subcoupler 1035 including T input ports I5 and one output port O5, one 1×Q optical subcoupler 1036 including one input port I6 and Q output ports O6, and Q 1×P optical subcouplers 1037 including one input port I7 and P output ports O7. T, S, Q, and P are all positive integers. N=S×T, and M=Q×P. The S×1 optical subcoupler 1034 may also be referred to as an S×1 optical multiplexer or combiner, and the T×1 optical subcoupler 1035 may also be referred to as a T×1 optical multiplexer or combiner. Output ports O4 of the T S×1 optical subcouplers are respectively connected to the T input ports I5 of the T×1 optical subcouplers, the output port O5 of the T×1 optical subcoupler 1035 is connected to the input port I6 of the 1×Q optical subcoupler 1036, and the Q output ports O6 of the 1×Q optical subcoupler 1036 are respectively connected to input ports I7 of the Q 1×P optical subcouplers 1037. S×T input ports I4 are respectively connected to the N transmitters. Q×P output ports O7 are respectively connected to the M receivers. The connected T S×1 optical subcouplers 1034 and T×1 optical subcoupler 1035 can implement the optical signal coupling function, and the connected 1×Q optical subcouplers 1036 and Q 1×P optical subcouplers 1037 can implement the optical signal broadcasting function.

In the foregoing embodiment, the transmitter and the receiver in the communication system are a transmitter and a receiver in a working state, and the working state is a state in which communication can be performed. In the optical coupler in the foregoing three implementations, an example in which a quantity of input ports of the optical coupler is equal to a quantity of transmitters in the working state in the communication system, and a quantity of output ports of the optical coupler is equal to a quantity of receivers in the working state in the communication system is used for description. During actual implementation, the quantity of input ports of the optical coupler may be greater than the quantity of transmitters in the working state in the communication system. The quantity of output ports of the optical coupler may be greater than the quantity of receivers in the working state in the communication system. In a case, the optical coupler has an idle input port and an idle output port. In this way, it is convenient to connect a new transmitter and a new receiver, to expand a capacity of the communication system. In another case, the optical coupler includes an input port connected to a transmitter that is in a non-working state, and when the transmitter switches from the non-working state to the working state, the optical coupler can quickly respond to a first optical signal sent by the transmitter; and/or the optical coupler has an output port connected to a receiver that is in a non-working state. When the receiver switches from the non-working state to the working state, the optical coupler can also send the second optical signal to the receiver.

During deployment of the communication system, the integral optical coupler in the first optional implementation may be deployed based on quantities of input ports and output ports that are actually needed, or the cascaded optical coupler in the second or third optional implementation may be deployed. When the cascaded optical coupler in the second or third optional implementation is deployed in the communication system, during use of the communication system, the quantities of input ports and output ports of the optical coupler may be adjusted depending on an actual situation by adding a cascaded optical subcoupler or removing a cascaded optical subcoupler, to adapt to different requirements on the quantity of input ports and the quantity of output ports in different periods, so as to implement dynamic adjustment for the quantity of ports.

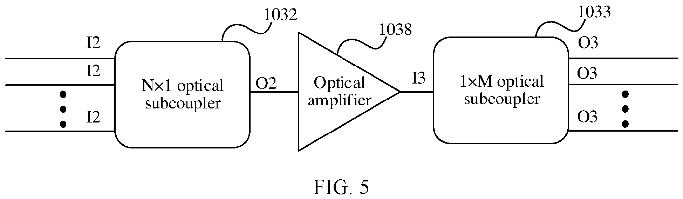

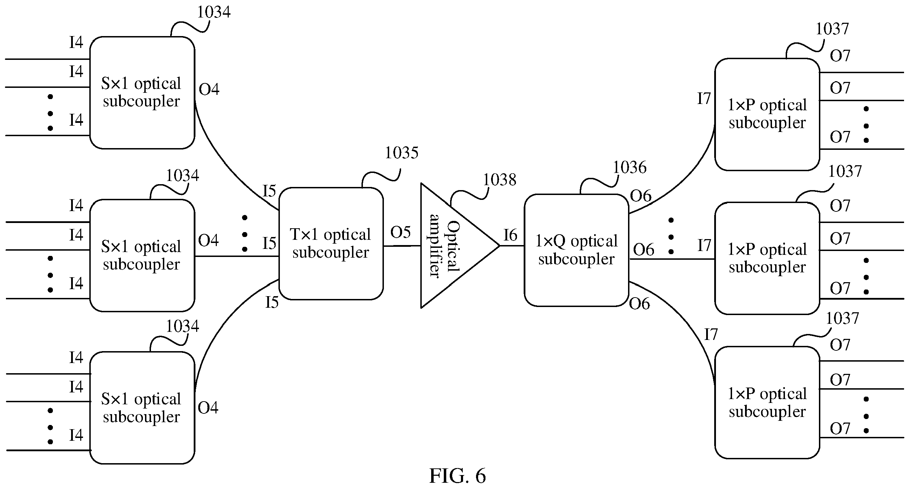

In the second optional implementation and the third optional implementation, because the optical coupler is formed by cascading a plurality of sub-couplers, an insertion loss exists between the connected sub-couplers, affecting a transmission effect of an optical signal inside the optical coupler. Optionally, in the optical coupler, an optical amplifier may be connected in series between at least one pair of connected optical subcouplers. For example, an optical amplifier may be connected in series between each pair of connected optical subcouplers. In addition, one or more optical amplifiers may be connected in series between a pair of connected optical subcouplers based on a situation. FIG. 5 and FIG. 6 are schematic diagrams of structures of two types of optical couplers in which an optical amplifier is disposed according to embodiments of this application. In both FIG. 5 and FIG. 6, an example in which one optical amplifier 1038 is disposed in the optical coupler is used for description. A quantity of and locations of optical amplifiers in the optical coupler are not limited. By disposing the optical amplifier, compensation for the insertion loss between the cascaded optical subcouplers can be implemented, thereby ensuring a communication effect.

The optical coupler is connected to the transmitter through an optical fiber, and is also connected to the receiver through an optical fiber. An insertion loss exists between the optical coupler and each transmitter and between the optical coupler and each receiver. Therefore, the optical amplifier is disposed between the optical coupler and at least one transmitter, to compensate for the insertion loss between the optical coupler and the transmitter. For example, an optical amplifier is disposed between the optical coupler and each transmitter. An optical amplifier is disposed between the optical coupler and at least one receiver, to compensate for the insertion loss between the optical coupler and the receiver. For example, an optical amplifier is disposed between the optical coupler and each receiver.

For example, the optical amplifier is a Raman amplifier, an erbium-doped fiber amplifier (Erbium Doped Fiber Amplifier, EDFA), a silicon optical amplifier (Silicon Optical Amplifier, SOA), or an optical fiber amplifier (Optical Fiber Amplifier, OFA). In an optional implementation, the optical coupler is a passive optical coupler. Because the passive coupler does not consume electric energy, optical signal transmission with low costs and low power consumption can be implemented, and overall manufacturing costs of the communication system are reduced. A manufacturing process of the coupler includes a directional coupler (directional coupler, DC) manufacturing process, a multi-mode interferometer (multi-mode interferometer, MMI) manufacturing process, and the like. This is not limited in this embodiment of this application.

The first optical signal is obtained by the transmitter through signal modulation. Correspondingly, the receiver needs to demodulate the received second optical signal. In different application scenarios, the transmitter has different modulation schemes, and the receiver has different demodulation schemes. Correspondingly, the communication systems are different types of communication systems. In this embodiment of this application, the following two types of communication systems are used as an example for description.

In a first type, the communication system may be a direct modulation direct detection system. The direct modulation direct detection system is also referred to as an intensity modulation direct detection (Intensity Modulation Direct Detection, IM/DD) system. In the direct modulation direct detection system, each transmitter 101 is configured to modulate intensity of an optical signal (in other words, perform intensity modulation on the optical signal) to obtain the first optical signal. Each receiver 102 is configured to directly detect the received second optical signal through a detector. The detector may be an optical sensor, for example, a photodiode.

Based on an optical coherence principle, optical interference (also referred to as coherence) occurs when two light waves meet the following conditions: Frequencies are the same, a phase difference is constant, and vibration directions (also referred to as polarization directions) are the same. In the direct modulation direct detection system, if the first optical signals sent by the plurality of transmitters 101 are signals obtained by modulating laser signals, because laser is good coherent light, if wavelengths of a plurality of optical signals are the same, frequencies of the plurality of optical signals are the same, and when the optical coupler 103 couples the N first optical signals sent by the N transmitters 101 into one second optical signal, the plurality of first optical signals with a same wavelength have random optical carrier phases and fixed vibration directions. Therefore, in a specific period, a case in which a phase difference is constant and vibration directions are the same may occur, so that the coherence conditions are met, and a light coherence phenomenon is generated. The coherence phenomenon includes a coherence cancellation phenomenon. Once the coherence cancellation phenomenon occurs between any two first optical signals, the receiver cannot receive, through the second optical signal, data carried in the two first optical signals. Consequently, a communication service of the communication system is interrupted, and a communication fault easily occurs. For example, if wavelengths of the two first optical signals are the same, the optical carriers of the two first optical signals may have a phase difference of 180 degrees and a same vibration direction at a moment, resulting in a coherence cancellation phenomenon between the two first optical signals.

To avoid a case of coherence cancellation between the N first optical signals, in an optional implementation, wavelengths of the first optical signals sent by the N transmitters 101 are different from each other. In this way, the coherence conditions are prevented from being met between the first optical signals, to avoid coherence cancellation and ensure normal communication of the communication system. For example, the N transmitters 101 each perform modulation of an optical signal by using a light source with a different wavelength, to ensure that wavelengths of the output N first optical signals are different from each other. For example, if the light source with a different wavelength is a laser light source, the first optical signal is a laser signal. In another optional implementation, the N first optical signals are all wide-spectrum optical signals. The wide-spectrum optical signal means that a spectral width of the optical signal is greater than a preset width threshold, where the preset width threshold is far greater than bandwidth of an electrical signal for signal modulation, and the electrical signal is generally an analog signal. For example, the preset width threshold is 10 to 1000 times bandwidth of the analog signal. The wide-spectrum optical signal is relative to a laser signal, and the spectral width of the wide-spectrum optical signal is far greater than a spectral width of the laser signal. When all the first optical signals sent by the N transmitters 101 are wide-spectrum optical signals, because a spectrum of each first optical signal is wide, a coherence cancellation phenomenon does not exist between the first optical signals. For example, the N transmitters 101 all perform modulation of an optical signal by using a wide-spectrum light source, to ensure that all the output N first optical signals are wide-spectrum light sources. Center wavelengths of the N wide-spectrum optical signals may be the same, or may be different. During actual implementation, in the N first optical signals, wavelengths of some first optical signals may be different from each other, and the other first optical signals are wide-spectrum signals, provided that a case of coherence cancellation does not occur between the N first optical signals.

In a second type, the communication system is a coherent communication system. For example, the coherent communication system may be a polarization multiplexing coherent system, for example, a polarization division multiplexing (polarization division multiplexing, PDM)-quadrature phase shift keying (quadrature phase shift keying, QPSK) system. In the coherent communication system, each of the transmitters 101 is configured to perform modulation using an optical signal, to obtain the first optical signal. For example, intensity of the optical signal is directly modulated to obtain the first optical signal. Alternatively, coherent modulation is performed on the optical signal to obtain the first optical signal. For example, the coherent modulation is QPSK modulation. Each of the receivers 102 is configured to perform coherent reception on the second optical signal using an optical signal, and demodulate the received second optical signal. A coherent reception process may include: after coherent coupling is performed on the received second optical signal and a local oscillator (Local Oscillator) optical signal, detecting a coupled second optical signal using a coherent receiver (also referred to as a balance receiver), to obtain the detected second optical signal.

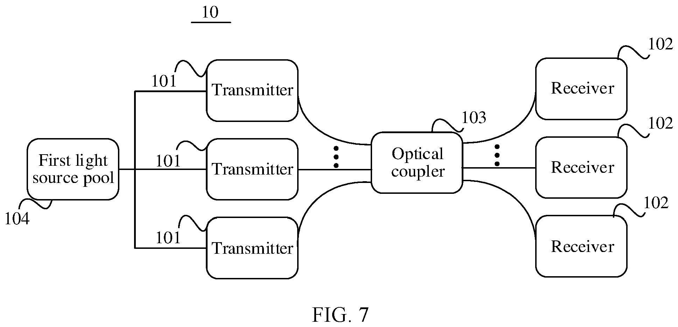

As described above, regardless of the direct modulation direct detection system or the coherent communication system, each of the transmitter 101 needs to perform modulation using an optical signal, to obtain the first optical signal. In an optional example, the communication system includes N light sources that are in a one-to-one correspondence with the N transmitters 101, and each light source is configured to provide an optical signal for a corresponding transmitter 101, so that the transmitter 101 performs modulation using the optical signal. In another optional example, FIG. 7 is a schematic diagram of a structure of another communication system 10 according to an embodiment of this application. The communication system 10 further includes a first light source pool 104 shared by the N transmitters 101. Each of the transmitters 101 is configured to perform modulation using an optical signal provided by the first light source pool 104, to obtain the first optical signal. For example, each of the transmitters 101 is connected to the first light source pool through an optical fiber, and receives, through the optical fiber, an optical signal transmitted by the first light source pool. A single light source has high manufacturing costs and is prone to be damaged; and therefore, in this application, the first light source pool is shared, to implement centralized management and maintenance of light sources, it is convenient to perform timely fault diagnosis when a fault occurs in the light sources, use and maintenance costs of the light sources are reduced, and security and reliability of the light sources are improved. In addition, the first light source pool may include one or more light sources, and the light sources included in the first light source pool may be packaged in an integrated manner. For example, the light sources may be packaged into an optical chip or an optical module capable of transmitting one or more optical signals. In this way, manufacturing costs can be reduced. Further, if a quantity of light sources included in the first light source pool is less than N, in comparison with a case in which one light source is disposed for each transmitter, a quantity of light sources used by the transmitters in the communication system can be reduced, reducing use costs.

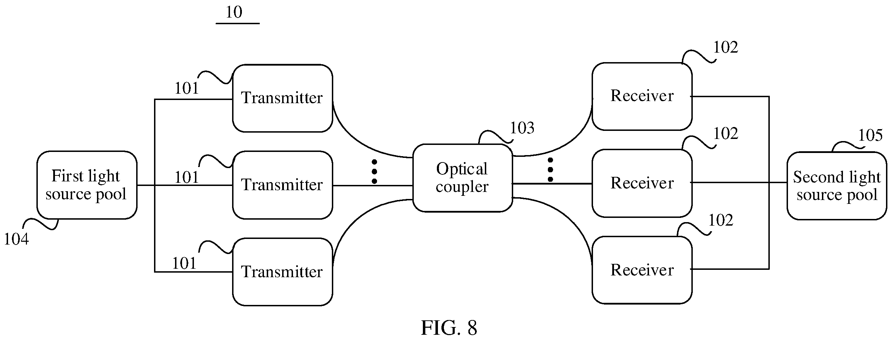

In the coherent communication system, each of the receivers 102 needs to perform signal demodulation on the second optical signal using an optical signal. For example, coherent reception is performed on the second optical signal using an optical signal, and demodulation is performed on the received second optical signal. In an optional example, the communication system includes M light sources that are in a one-to-one correspondence with the M receivers 102. Each light source is configured to provide an optical signal for a corresponding receiver 102, so that the receiver 102 performs demodulation of the second optical signal using the optical signal. In another optional example, FIG. 8 is a schematic diagram of a structure of still another communication system 10 according to an embodiment of this application. The communication system further includes a second light source pool 105 shared by the M receivers 102. Each of the receivers 102 is configured to perform signal demodulation on the second optical signal using an optical signal provided by the second light source pool 105. For example, each of the receivers 102 is connected to the second light source pool through an optical fiber, and receives, through the optical fiber, an optical signal transmitted by the second light source pool. Reference is made to effects of the first light source pool. In this application, the second light source pool is shared, to implement centralized management and maintenance of light sources, facilitating to provide timely fault diagnosis in the occurrence of fault in the light sources. This reduces use and maintenance costs of the light sources and also improves security and reliability of the light sources. In addition, the second light source pool may include one or more light sources, and the light sources included in the second light source pool may be packaged in an integrated manner. For example, the light sources may be packaged into an optical chip or an optical module capable of transmitting one or more optical signals. In this way, manufacturing costs can be reduced. Further, if a quantity of light sources included in the second light source pool is less than M, in comparison with a case in which one light source is disposed for each receiver, a quantity of light sources used by the receivers in the communication system can be reduced, reducing use costs.

Types of light sources in the first light source pool may be the same or may be different. Types of light sources in the second light source pool may be the same or may be different. If the types of the light sources in the light source pool are the same, light source management may further be facilitated. In addition, in the coherent communication system, if the N transmitters 101 share the first light source pool 104 and the M receivers 102 share the second light source pool 105, the first light source pool 104 and the second light source pool 105 may further be integrated into a same light source pool. In this way, use and maintenance costs can further be reduced.

Because the second optical signal is obtained by coupling the N first optical signals, original data carried in the second optical signal is the same as original data carried in the N first optical signals. By broadcasting the second optical signal, it can be ensured that all the M receivers 102 receive the original data sent by the N transmitters 101. Original data carried in any optical signal is data modulated on the optical signal, for example, bit information carried in the optical signal. The original data carried in the first optical signal and the second optical signal comes from a signal source of the transmitter. The signal source may output an electrical signal, and the electrical signal may be an analog signal or a digital signal. It should be noted that the modulation refers to a process of outputting an optical signal based on an electrical signal. Correspondingly, demodulation refers to a process of restoring an optical signal to an electrical signal.

According to the communication system provided in this embodiment of this application, original data carried in first optical signals sent by different transmitters 101 in the N transmitters 101 is respectively corresponding to different electrical physical resources. Each receiver 102 is configured to obtain, from original data carried in the second optical signal, original data corresponding to an electrical physical resource corresponding to the receiver. In this way, point-to-multipoint or multipoint-to-multipoint communication between the transmitter and the receiver can be implemented.

A quantity of electrical physical resources supported by the communication system is greater than or equal to a quantity of transmitters, to ensure that different electrical physical resources can be allocated to different transmitters. In a first example, each transmitter may determine, based on a first correspondence between the transmitters and the electrical physical resources, an electrical physical resource corresponding to the transmitter, and/or each receiver may determine, based on a second correspondence between the receivers and the electrical physical resources, an electrical physical resource corresponding to the receiver. The first correspondence and the second correspondence may be preconfigured. In an implementation, the first correspondence and the second correspondence may be manually configured when the communication system is deployed. In another implementation, the first correspondence may be manually configured when the communication system is deployed. The N transmitters 101 include a management transmitter configured to configure the second correspondence. The management transmitter sends the second correspondence to the M receivers via the optical coupler. It should be noted that the first correspondence and the second correspondence may alternatively be respectively configured on a transmitter side and a receiver side in another manner. This is not limited in this embodiment of this application.

In a second example, the electrical physical resource corresponding to the transmitter may be obtained by each transmitter when the transmitter needs to send the first optical signal, and/or, the electrical physical resource corresponding to the receiver may be obtained by each receiver when the receiver needs to parse the second optical signal. For example, after determining a destination address of the obtained original data, each transmitter queries, based on the destination address, a correspondence between a destination address and an electrical physical resource, and determines an electrical physical resource corresponding to the destination address as the electrical physical resource corresponding to the transmitter. For another example, the first optical signal sent by each transmitter further carries address data, and the address data includes a destination address added based on the original data. Correspondingly, the second optical signal also carries the address data in the N first optical signals. After receiving the second optical signal, each receiver parses N pieces of address data carried in the second optical signal. When a destination address indicated by any one of the N pieces of address data is an address of the receiver, an electrical physical resource corresponding to the address is determined as the electrical physical resource corresponding to the receiver. For example, the destination address may be a digital sequence, for example, a binary digital sequence, provided that the destination address can function as an address identifier. Optionally, in the second example, the first optical signal is obtained by modulating an electrical signal (for example, an analog signal in the following descriptions). For a format of the electrical signal, refer to a conventional packet format (also referred to as a frame format), for example, an Ethernet packet format.

The electrical physical resource is different from the optical carrier. In different application scenarios, the electrical physical resource may be different communication resources. Correspondingly, the transmitter and the receiver have different signal transmitting and receiving principles. In this embodiment of this application, the following two implementations are used as an example for description.

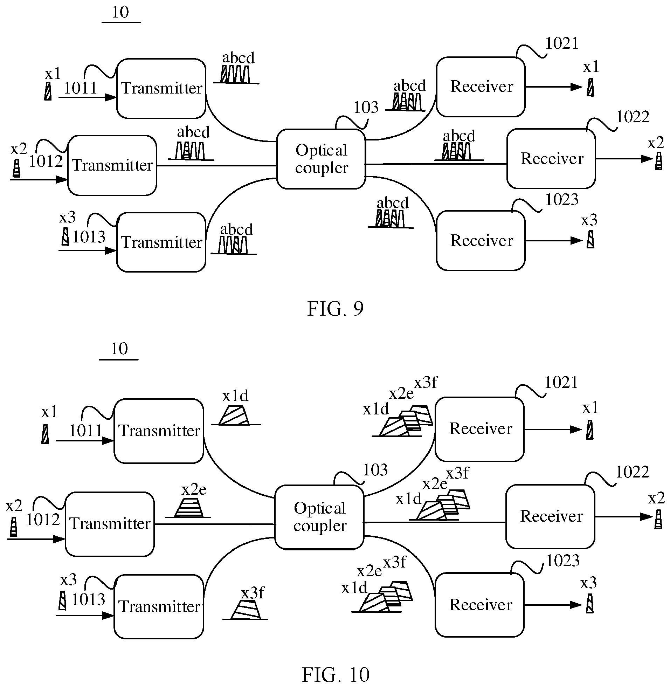

In a first implementation, the electrical physical resource is a frequency domain resource, such as a subcarrier, and the transmitter and the receiver communicate based on a frequency division multiple access (frequency division multiple access, FDMA) principle. FIG. 9 is a schematic diagram of a communication principle of a communication system according to an embodiment of this application. As shown in FIG. 9, each transmitter 101 is further configured to generate, after mapping a digital signal to a subcarrier corresponding to the transmitter 101, the first optical signal based on an analog signal converted from the digital signal. Different transmitters 101 in the N transmitters 101 correspond to different subcarriers. For example, each transmitter is configured to perform the following steps.

A1: Map a digital signal to a subcarrier corresponding to the transmitter.

For example, each transmitter 101 may first perform constellation mapping processing on an obtained digital signal, and then perform frequency shift (also referred to as frequency shift) processing, to map the digital signal to the corresponding subcarrier. When original data is an analog signal, the digital signal may be obtained by converting an analog signal output by a signal source. When original data is a digital signal, the digital signal may be a digital signal directly output by a signal source.

A2: Convert the digital signal mapped to the subcarrier into an analog signal.

For example, each transmitter 101 may perform conversion from a digital signal to an analog signal through a digital-to-analog conversion module.

A3: Generate the first optical signal based on the analog signal.

For example, each transmitter 101 may modulate an optical signal into the first optical signal based on the analog signal in a manner of intensity modulation or coherent modulation.

Correspondingly, each receiver 102 is further configured to convert the second optical signal into an analog signal, convert the analog signal into a digital signal, and obtain a digital signal on a subcarrier corresponding to the receiver 102. For example, each receiver is configured to perform the following steps.

B1: Receive the second optical signal, and convert the received second optical signal into an analog signal.

For example, each receiver 102 may receive the second optical signal in a direct reception or coherent reception manner.

B2: Convert the analog signal into a digital signal.

For example, each receiver may perform conversion from an analog signal to a digital signal through an analog-to-digital conversion module.

B3: Obtain a digital signal on a subcarrier corresponding to the receiver.

Refer to step A1. The N first optical signals correspond to N digital signals mapped to subcarriers, and the second optical signal is obtained by coupling the N first optical signals. Therefore, the second optical signal corresponds to the N digital signals. In step B2, the digital signal obtained through conversion from analog signal includes the N digital signals mapped to the subcarriers. Therefore, a process in which each receiver obtains the digital signal on the corresponding subcarrier includes a process of selecting, from the N digital signals mapped to the subcarriers, one or more digital signals corresponding to the receiver (that is, a digital signal mapped to the subcarrier corresponding to the receiver). In correspondence to the foregoing A1, because the analog signal and the digital signal are actually different representation forms of the original data, the receiver may use, based on a requirement of the receiver, the analog signal obtained by converting the obtained digital signal as the original data that needs to be obtained, or may directly use, without processing the digital signal again, the obtained digital signal as the original data that needs to be obtained.

It should be noted that a quantity of subcarriers supported by the communication system is greater than or equal to a quantity of transmitters, to ensure that different subcarriers are allocated to different transmitters.

In FIG. 9, assuming that N=3 and M=3, the three transmitters are transmitters 1011 to 1013, and the three receivers are receivers 1021 to 1023. In FIG. 9, each trapezoid on a horizontal line represents one subcarrier, and a trapezoid with a shadow on the horizontal line represents a subcarrier to which a digital signal is mapped, and indicates that the subcarrier is occupied. A blank trapezoid on the horizontal line indicates a subcarrier to which no digital signal is mapped, and indicates that the subcarrier is not occupied, in other words, the subcarrier is an idle subcarrier. FIG. 9 schematically shows four subcarriers, which are respectively subcarriers a, b, c, and d. It is assumed that the transmitters 1011 to 1013 correspond to the subcarriers a, b, and c respectively, and the receivers 1021 to 1023 correspond to the subcarriers a, b, and c respectively. The transmitter 1011 is used as an example. The transmitter 1011 is further configured to generate, after mapping a digital signal x1 to the subcarrier a, the first optical signal based on an analog signal converted from the digital signal. In this way, the first optical signal generated by the transmitter 1011 corresponds to the digital signal x1 mapped to the subcarrier a. Similarly, the first optical signals generated by the transmitters 1012 and 1013 respectively correspond to digital signals x2 and x3 mapped to the subcarriers b and c. Therefore, after the optical coupler couples the three first optical signals sent by the three transmitters into one second optical signal, the second optical signal corresponds to the digital signals mapped to the subcarriers a, b, and c. Each receiver 102 converts the second optical signal into an analog signal, and obtains, after converting the analog signal into a digital signal, the digital signals x1, x2, and x3 mapped to the subcarriers a, b, and c. Therefore, the receivers 1021 to 1023 respectively obtain the digital signals x1, x2, and x3 on the subcarriers a, b, and c. Through the foregoing process, point-to-point data transmission between the transmitter 1011 and the receiver 1021, point-to-point data transmission between the transmitter 1012 and the receiver 1022, and point-to-point data transmission between the transmitter 1013 and the receiver 1023 are implemented.

In a second implementation, the electrical physical resource is a code resource, for example, a spreading code, and the transmitter and the receiver communicate based on a code division multiple access (Code Division Multiple Access, CDMA) principle. FIG. 10 is a schematic diagram of a communication principle of a communication system according to an embodiment of this application. As shown in FIG. 10, each transmitter 101 is further configured to encode the digital signal into a spreading digital signal using a spreading code corresponding to the transmitter 101, and generate the first optical signal based on an analog signal converted from the spreading digital signal. The N transmitters 101 correspond to different spreading codes, and any two spreading codes are orthogonal. For example, each transmitter is configured to perform the following steps.

C1: Encode a digital signal into a spreading digital signal using a spreading code corresponding to the transmitter.

For example, each transmitter 101 may first perform constellation mapping processing on an obtained digital signal, and then perform encoding processing, to encode the digital signal into a spreading digital signal. When original data is an analog signal, the digital signal may be obtained by converting an analog signal output by a signal source. When original data is a digital signal, the digital signal may be a digital signal directly output by a signal source.

C2: Convert the spreading digital signal into an analog signal.

For example, each transmitter 101 may convert a spreading digital signal into an analog signal through the digital-to-analog conversion module.

C3: Generate the first optical signal based on the analog signal.

For example, each transmitter 101 may modulate an optical signal into the first optical signal based on the analog signal in a manner of intensity modulation or coherent modulation.

Correspondingly, each receiver 102 is further configured to convert the second optical signal into an analog signal, convert the analog signal into a digital signal, and decode the converted digital signal using a spreading code corresponding to the receiver 102, to obtain a decoded digital signal. For example, each receiver is configured to perform the following steps.

D1: Receive the second optical signal, and convert the received second optical signal into an analog signal.

For example, each receiver 102 may receive the second optical signal in a direct reception or coherent reception manner.

D2: Convert the analog signal into a digital signal.

For example, each receiver may perform conversion from an analog signal to a digital signal through the analog-to-digital conversion module.

D3: Decode the digital signal using a spreading code corresponding to the receiver, to obtain a decoded digital signal.

Refer to step C1. Because the N first optical signals correspond to N spreading digital signals, and the second optical signal is obtained by coupling the N first optical signals, the second optical signal corresponds to the N spreading digital signals. The digital signal obtained by converting the analog signal includes the N spreading digital signals. A process in which the receiver 102 decodes the digital signal based on the corresponding spreading code to obtain the digital signal includes a process of decoding the N spreading digital signals based on the corresponding spreading code. Because different spreading codes are orthogonal to each other, actually, a spreading digital signal that can be decoded using the spreading code corresponding to the receiver 102 is a spreading digital signal obtained by performing encoding using the same spreading code on the transmitter side. It should be noted that a quantity of spreading codes supported by the communication system is greater than or equal to the quantity of transmitters, to ensure that different spreading codes are allocated to different transmitters. In correspondence to the foregoing C1, because the analog signal and the digital signal are actually different representation forms of the original data, the receiver may use, based on a requirement of the receiver, the analog signal obtained by converting the obtained digital signal as the original data that needs to be obtained, or may directly use, without processing the obtained digital signal again, the digital signal as the original data that needs to be obtained.

In FIG. 10, assuming that N=3 and M=3, the three transmitters are respectively transmitters 1011 to 1013, and the three receivers are receivers 1021 to 1023. In FIG. 10, it is assumed that the transmitters 1011 to 1013 respectively correspond to spreading codes d, e, and f, and the receivers 1021 to 1023 respectively correspond to the spreading codes d, e, and f. The transmitter 1011 is used as an example. The transmitter 1011 is further configured to encode the digital signal x1 into a spreading digital signal x1d using the spreading code d, and generate the first optical signal based on an analog signal converted from the spreading digital signal x1d. In this way, the first optical signal generated by the transmitter 1011 corresponds to the spreading digital signal x1d. Similarly, the first optical signals generated by the transmitters 1012 and 1013 respectively correspond to spreading digital signals x2e and x3f. Therefore, after the optical coupler couples the three first optical signals sent by the three transmitters into one second optical signal, the second optical signal corresponds to the spreading digital signals x1d, x2e, and x3f. Each receiver 102 converts the second optical signal into an analog signal, and obtains, after converting the analog signal into a digital signal, spreading digital signals x1d, x2e, and x3f. Therefore, the receivers 1021 to 1023 respectively decode the spreading digital signals x1d, x2e, and x3f using the spreading codes d, e, and f, to obtain the digital signals x1, x2, and x3. Through the foregoing process, point-to-point data transmission between the transmitter 1011 and the receiver 1021, point-to-point data transmission between the transmitter 1012 and the receiver 1022, and point-to-point data transmission between the transmitter 1013 and the receiver 1023 are implemented.

In the foregoing implementations, an example in which different transmitters 101 establish an association relationship between the original data and different electrical physical resources in digital domain is used for description. During actual implementation, different transmitters 101 may also establish an association relationship between the original data and different electrical physical resources in analog domain, to implement an association relationship establishment effect equivalent to that in digital domain. For example, the transmitter and the receiver communicate based on the FDMA principle. In analog domain, the electrical physical resource may be a radio frequency (Radio Frequency, RF) carrier, the original data is an analog signal, for example, a voltage signal, and an action of each transmitter may be: performing modulation on the analog signal by using a radio frequency carrier corresponding to the transmitter, to obtain a modulated analog signal; and modulating an optical signal into the first optical signal based on the modulated analog signal. Different transmitters in the N transmitters correspond to different radio frequency carriers, and any two radio frequency carriers are orthogonal. Correspondingly, the receiver may still perform steps B1 to B3. It should be noted that, in analog domain, performing carrier modulation on an analog signal by using a corresponding radio frequency carrier means modulating amplitude or intensity of the radio frequency carrier based on the analog signal. For example, the transmitter and the receiver communicate based on the CDMA principle. In analog domain, the electrical physical resource is a spreading code, and the spreading code is an analog spreading code, for example, a two-level sequence electrical signal. The original data is an analog signal, such as a voltage signal. An action of each transmitter may be: performing spreading modulation on the analog signal using a corresponding spreading code, to obtain a modulated analog signal, and modulating an optical signal into the first optical signal based on the modulated analog signal. Different transmitters in the N transmitters correspond to different spreading codes, and any two spreading codes are orthogonal. Correspondingly, the receiver may still perform steps D1 to D3. Details are not described again in this embodiment of this application.

It should be noted that an example in which M=N, each transmitter corresponds to one electrical physical resource, and each receiver corresponds to one electrical physical resource is used for description in the foregoing implementations. During actual implementation, a quantity of transmitters and a quantity of receivers may not be equal. Each transmitter may correspond to a plurality of electrical physical resources, provided that it is ensured that different transmitters correspond to different electrical physical resources. Each receiver may alternatively correspond to a plurality of electrical physical resources. In addition, only an example in which the electrical physical resource is a subcarrier or a spreading code is used for description in the foregoing embodiment. During actual implementation, the electrical physical resource may alternatively be another frequency domain resource, another code domain resource, or a time domain resource. The communication system may alternatively use another communication principle to implement data transmission that is between the transmitter and the receiver and that is based on an electrical physical resource. For example, the communication system may alternatively perform communication according to a time division multiple access (Time division multiple access, TDMA) principle. However, compared with communication performed according to the TDMA principle, communication performed according to the foregoing CDMA or FDMA principle has higher reliability and a lower delay.

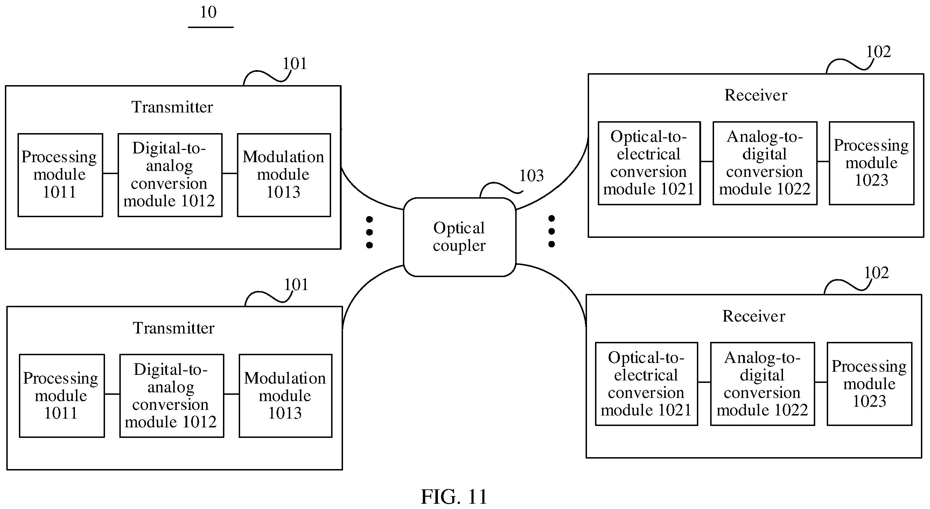

As described above, in different communication systems, transmitters have different modulation mechanisms, and receivers have different demodulation mechanisms, and/or signal receiving and transmitting principles are different. Therefore, the transmitter and the receiver perform different actions. For ease of understanding by a reader, FIG. 11 is a schematic diagram of a structure of a communication system. In FIG. 11, a structure of the communication system is used as an example to describe structures of the transmitter and the receiver. The transmitter 101 includes a processing module 1011, a digital-to-analog conversion module 1012, and a modulation module 1013. The processing module 1011 is configured to receive an electrical signal output by a signal source, and output a digital signal based on the electrical signal. The digital-to-analog conversion module 1012 is configured to convert the digital signal output by the processing module 1011 into an analog signal. The modulation module 1013 is configured to perform modulation based on the analog signal using an optical signal, to obtain the first optical signal. The digital signal output by the processing module 1011 corresponds to an electrical physical resource corresponding to the transmitter. The digital-to-analog conversion module 1012 may be a digital-to-analog conversion (digital to analog conversion, DAC) chip or a serializer/deserializer (serdes). In the foregoing embodiment, an example in which the modulation module 1013 performs modulation of an optical signal based on the analog signal is used. During actual implementation, an optical modulation process may alternatively be performed based on a digital signal. This is not limited in this embodiment of this application.

The receiver 102 includes an optical-to-electrical conversion module 1021, an analog-to-digital conversion module 1022, and a processing module 1023. The optical-to-electrical conversion module 1021 is configured to receive the second optical signal sent by the optical coupler, and convert the second optical signal into an analog signal. The analog-to-digital conversion module 1022 is configured to convert the analog signal output by the optical-to-electrical conversion module 1021 into a digital signal. The processing module 1023 is configured to obtain an electrical signal based on the digital signal output by the analog-to-digital conversion module 1022. A process of converting an analog signal into a digital signal may include: performing analog-to-digital conversion (analog-to-digital conversion, ADC) sampling on a received analog signal to obtain a digital signal; or performing clock data recovery (clock data recovery, CDR) sampling on a received analog signal to obtain a digital signal. The analog-to-digital conversion module 1022 may be an ADC chip or a CDR chip.

For example, when the electrical physical resource is a subcarrier, the transmitter and the receiver communicate based on the FDMA principle. The processing module 1011, the digital-to-analog conversion module 1012, and the modulation module 1013 are configured to respectively perform the foregoing steps A1, A2, and A3. Correspondingly, the optical-to-electrical conversion module 1021, the analog-to-digital conversion module 1022, and the processing module 1023 are configured to respectively perform the foregoing steps B1, B2, and B3. When the physical resource is a spreading code, and the transmitter and the receiver communicate based on the CDMA principle, the processing module 1011, the digital-to-analog conversion module 1012, and the modulation module 1013 are configured to respectively perform the foregoing steps C1, C2, and C3. Correspondingly, the optical-to-electrical conversion module 1021, the analog-to-digital conversion module 1022, and the processing module 1023 are configured to respectively perform the foregoing steps D1, D2, and D3. Optionally, both the processing module 1011 and the processing module 1023 may be digital signal processing (Digital Signal Processing, DSP) modules.

During actual implementation, the transmitter and/or the receiver further have/has another function. Correspondingly, another module may be disposed therein, or a new function may be added to an existing module. For example, the transmitter further includes one or more of an optical amplifier or an optical multiplexer. The receiver further includes one or more of an optical splitter or an optical amplifier. Further, optionally, the processing module 1023 is further configured to compensate for optical fiber dispersion and/or a nonlinear effect, and/or the processing module 1023 is further configured to perform error correction processing on a bit error generated in an optical signal transmission process, or the like.

In the communication system provided in this embodiment of this application, one hop of optical coupler replaces a plurality of levels of switches, to avoid electrical-to-optical conversion and optical-to-electrical conversion caused by the switches. In this way, the communication system has a high bandwidth and low delay feature, can effectively meet a communication requirement for large traffic and high quality, and implements effective compatibility in various communication scenarios. The communication system can be used in a remote communication scenario, and can also be used in a short-distance communication scenario. The optical fiber in the communication system can support a transmission rate of a single wave 10 G (to be specific, a transmission rate of each wave is 10 G), a transmission rate of a single wave 100 G (to be specific, a transmission rate of each wave is 100 G), and another transmission rate. For example, the communication system is an in-vehicle communication system, a data center system, an internet of things system, or an industrial interconnection system. In these communication systems, multipoint-to-multipoint communication needs to be implemented. However, in the communication system provided in this embodiment of this application, one or more electrical physical resources corresponding to each transmitter and one or more electrical physical resources corresponding to each receiver are set, so that the multipoint-to-multipoint communication can be effectively implemented. In addition, communication interference needs to be reduced to improve transmission reliability. In this embodiment of this application, communication between the transmitter and the receiver is performed through the optical fiber and the optical coupler, thereby effectively shielding electromagnetic interference on a transmission link. For example, the in-vehicle communication system is a communication system deployed inside a vehicle. The in-vehicle communication system includes a plurality of communication nodes, and each communication node includes at least one transmitter and/or at least one receiver. For example, each communication node includes one transmitter and one receiver. Transmitters of the plurality of communication nodes may include any transmitter in the foregoing embodiments. Receivers of the plurality of communication nodes may include any receiver in the foregoing embodiments. For example, the plurality of communication nodes include at least two of the following: a cockpit data center (Cockpit Data Center, CDC, also referred to as an intelligent cockpit), a mobile data center (Mobile Data Center, MDC, also referred to as an intelligent driving module), a vehicle dynamic control (Vehicle Dynamic Control, VDC) module (also referred to as an entire vehicle control module), and a vehicle interface unit (Vehicle Interface Unit, VIU). The data center system includes a plurality of servers, and each server includes at least one transmitter and/or at least one receiver. For example, each server includes one transmitter and one receiver. Transmitters of the plurality of servers may include any transmitter in the foregoing embodiments. Receivers of the plurality of servers may include any receiver in the foregoing embodiments.

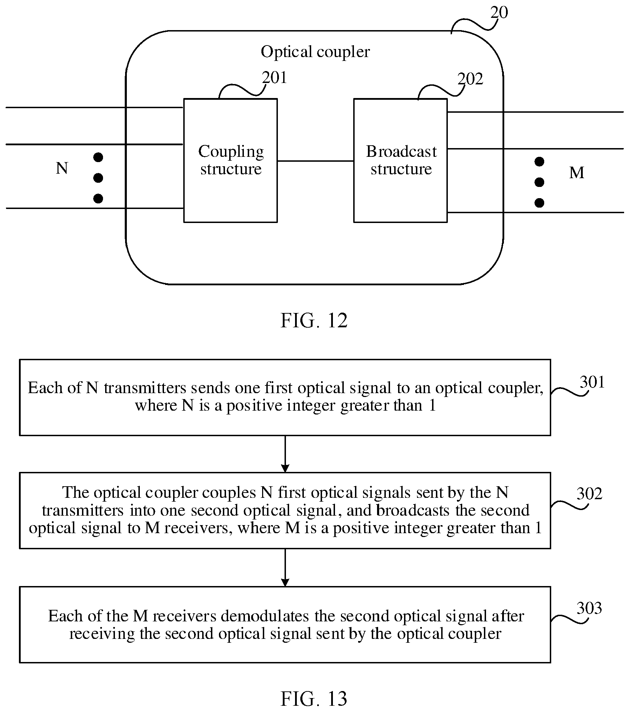

FIG. 12 is a schematic diagram of a structure of an optical coupler 20 according to an embodiment of this application. The optical coupler 20 may be used in the communication system 10. The optical coupler 20 includes a coupling structure 201, where the coupling structure is configured to be connected to N transmitters through an optical fiber, the coupling structure can implement the foregoing optical signal coupling function, and the coupling structure is configured to couple N first optical signals sent by the N transmitters into one second optical signal, where N is a positive integer greater than 1; and a broadcast structure 202, where the broadcast structure is configured to be connected to M receivers through an optical fiber, the broadcast structure can implement the optical signal broadcasting function, and the broadcast structure is configured to broadcast the second optical signal to the M receivers, where M is a positive integer greater than 1.

In the optical coupler provided in this embodiment of this application, the coupling structure is configured to couple first optical signals sent by the transmitters into one second optical signal. The broadcast structure is configured to broadcast the second optical signal to the M receivers, to implement communication between the N transmitters and the M receivers. In this way, the optical coupler can implement communication between the transmitter and the receiver without performing optical-to-electrical conversion processing, and a communication delay can be effectively reduced in comparison with a switch.

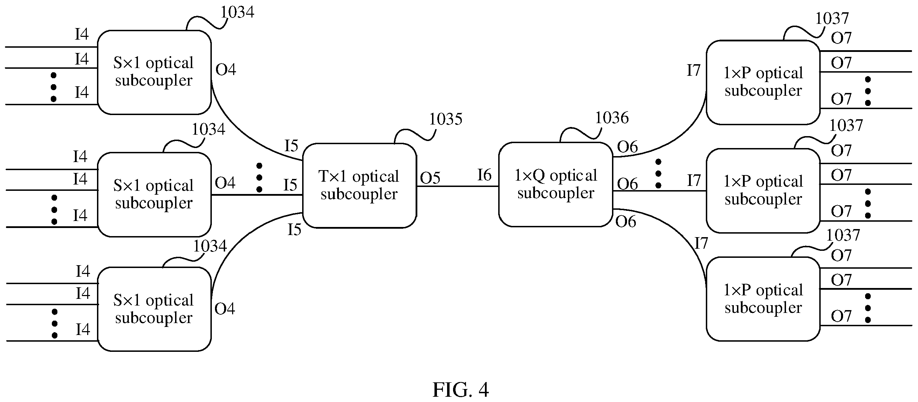

The foregoing optical coupler may have a plurality of implementations. The following uses three types of optical couplers as an example for description. In a first implementation, the optical coupler is an N×M optical coupler including N input ports and M output ports. For a structure of the optical coupler, refer to FIG. 2. In a second implementation, the coupling structure 201 is an N×1 optical subcoupler including N input ports and one output port, and the N×1 optical subcoupler may also be referred to as an N×1 optical multiplexer or combiner. The broadcast structure 202 is a 1×M optical subcoupler including one input port and M output ports. The output port of the N×1 optical subcoupler is connected to the input port of the 1×M optical subcoupler. For a structure of the optical coupler, refer to FIG. 3. In a third implementation, the coupling structure 201 includes T S×1 optical subcouplers including S input ports and one output port, and one T×1 optical subcoupler including T input ports and one output port. The broadcast structure 202 includes one 1×Q optical subcoupler including one input port and Q output ports, and Q 1×P optical subcouplers including one input port and P output ports. The S×1 optical subcoupler may also be referred to as an S×1 optical multiplexer or combiner, and the T×1 optical subcoupler may also be referred to as a T×1 optical multiplexer or combiner. T, S, Q, and P are all positive integers, N=S×T, and M=Q×P. Output ports of the T S×1 optical subcouplers are respectively connected to the T input ports of the T×1 optical subcoupler, the output port of the T×1 optical subcoupler is connected to the input port of the 1×Q optical subcoupler, and the Q output ports of the 1×Q optical subcoupler are respectively connected to input ports of the Q 1×P optical subcouplers. For a structure of the optical coupler, refer to FIG. 4.

Further, for the structure and a corresponding effect of the optical coupler 20, refer to the structure and the corresponding effect of the optical coupler 103 in the communication system. Details are not described again in this embodiment of this application.

FIG. 13 is a schematic flowchart of a communication method according to an embodiment of this application. The communication method may be applied to the communication systems shown in FIG. 1, FIG. 7, and FIG. 8 to FIG. 11. As shown in FIG. 13, the method includes the following steps.

S301: Each of N transmitters sends one first optical signal to an optical coupler, where N is a positive integer greater than 1.

As described above, regardless of a direct modulation direct detection system or a coherent communication system, each of the transmitters needs to perform modulation using an optical signal, to obtain the first optical signal, and then sends the first optical signal. In an optional example, the communication system includes N light sources that are in a one-to-one correspondence with the N transmitters, and each light source is configured to provide an optical signal for a corresponding transmitter, so that the transmitter performs modulation using the optical signal. In another optional example, as shown in FIG. 7, each of the transmitters performs modulation using an optical signal provided by a first light source pool, to obtain the first optical signal. The first light source pool is a light source pool shared by the N transmitters.

Optionally, when the communication system is the direct modulation direct detection system, each transmitter obtains the first optical signal in a manner of performing intensity modulation on an optical signal. Wavelengths of first optical signals sent by the N transmitters are different from each other. Alternatively, N first optical signals sent by the N transmitters are all wide-spectrum optical signals.

S302: The optical coupler couples the N first optical signals sent by the N transmitters into one second optical signal, and broadcasts the second optical signal to M receivers, where M is a positive integer greater than 1.

For a structure and a working principle of the optical coupler, reference may be made to the optical coupler in the foregoing embodiment. The optical coupler couples the N first optical signals sent by the N transmitters into one second optical signal, in other words, superimposes the N first optical signals into one second optical signal. The process includes coupling power of the N first optical signals and coupling wavelengths of the N first optical signals. For example, a process of coupling the power of the N first optical signals includes superposing the power of the N first optical signals. A process of coupling the wavelengths of the N first optical signals includes combining the wavelengths of the N first optical signals. Optionally, a process of broadcasting the second optical signal to the M receivers includes: separately sending the second optical signal that carries same original data to the M receivers 102. Power of the second optical signal broadcast to the M receivers may be the same or may be different, but original data carried by the second optical signal is the same.

S303: Each of the M receivers demodulates the second optical signal after receiving the second optical signal sent by the optical coupler.

For example, in the coherent communication system, each of the receivers needs to perform signal demodulation on the second optical signal using an optical signal. In an optional example, the communication system includes M light sources that are in a one-to-one correspondence with the M receivers. Each light source is configured to provide an optical signal for a corresponding receiver, so that the receiver performs demodulation of the second optical signal using the optical signal. In another optional example, as shown in FIG. 8, each of the receivers performs signal demodulation on the second optical signal using an optical signal provided by a second light source pool. The second light source pool is a light source pool shared by the M receivers.

In the communication method provided in this embodiment of this application, the N transmitters and the M receivers communicate with each other via the optical coupler. The optical coupler couples first optical signals sent by the transmitters into one second optical signal, and then broadcasts the second optical signal to the M receivers. In this way, the optical coupler can implement communication between the transmitter and the receiver without performing optical-to-electrical conversion processing, and a communication delay can be effectively reduced in comparison with a switch. In addition, according to the communication method provided in this application, only one hop of optical coupler is needed for data transmission between the transmitter and the receiver. Therefore, the communication delay can further be reduced, a transmission capacity of the communication system can be improved, and communication power consumption can be reduced. In this embodiment of this application, in the N transmitters, original data carried in first optical signals sent by different transmitters is corresponding to different electrical physical resources. A process of the demodulating the second optical signal by the receiver includes: Each receiver obtains, from original data carried in the second optical signal, original data corresponding to an electrical physical resource corresponding to the receiver. In this way, point-to-multipoint or multipoint-to-multipoint communication between the transmitter and the receiver can be implemented.

The electrical physical resource is different from the optical carrier. In different application scenarios, the electrical physical resource may be different resources. Correspondingly, the transmitter and the receiver have different signal transmitting and receiving principles. In this embodiment of this application, the following two implementations are used as an example for description.

In a first implementation, the electrical physical resource is a subcarrier. The original data is a digital signal. The transmitter and the receiver communicate based on an FDMA principle. In the foregoing S301, a process in which each transmitter sends one first optical signal to the optical coupler includes: Each transmitter generates, after mapping a digital signal to a subcarrier corresponding to the transmitter, the first optical signal based on an analog signal converted from the digital signal mapped to the subcarrier. Different transmitters in the N transmitters correspond to different subcarriers, and any two subcarriers are orthogonal. Correspondingly, in the foregoing S303, a process in which each receiver obtains, from original data carried in the second optical signal, original data corresponding to an electrical physical resource corresponding to the receiver includes: Each receiver converts the second optical signal into an analog signal, converts the analog signal into a digital signal, and obtains a digital signal on a subcarrier corresponding to the receiver. For the foregoing process, refer to a process corresponding to FIG. 9.

In a second implementation, the electrical physical resource is a spreading code. The original data is a digital signal. The transmitter and the receiver communicate based on a CDMA principle. In the foregoing S301, a process in which each transmitter sends one first optical signal to the optical coupler includes: The transmitter encodes a digital signal into a spreading digital signal using a spreading code corresponding to the transmitter, and generates the first optical signal based on an analog signal converted from the spreading digital signal. Spreading codes corresponding to the N transmitters are different, and any two spreading codes are orthogonal. Correspondingly, in S303, a process in which each receiver obtains, from original data carried in the second optical signal, original data corresponding to an electrical physical resource corresponding to the receiver includes: Each receiver converts the second optical signal into an analog signal, converts the analog signal into a digital signal, and decodes the digital signal using a spreading code corresponding to the receiver, to obtain a decoded digital signal.

It should be noted that the original data may alternatively be an analog signal. If the original data is an analog signal, each transmitter may first convert the received analog signal into a digital signal, and then process the digital signal. For the processing manner, refer to the foregoing two implementations. A sequence of the steps of the communication method provided in this embodiment of this application may be properly adjusted, and the steps may also be correspondingly added or removed based on a situation. Any variation readily figured out by a person skilled in the art within the technical scope disclosed in this application shall fall within the protection scope of this application, and details are not described again.

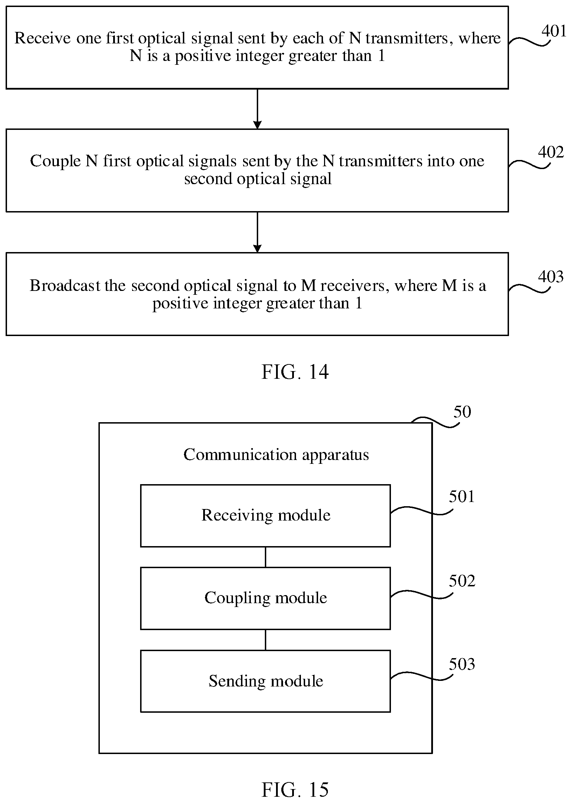

FIG. 14 is a schematic flowchart of a communication method according to an embodiment of this application. The communication method may be applied to the optical coupler shown in any one of FIG. 2 to FIG. 6 and FIG. 12. As shown in FIG. 14, the method includes the following steps.

S401: Receive one first optical signal sent by each of N transmitters, where N is a positive integer greater than 1.

S402: Couple N first optical signals sent by the N transmitters into one second optical signal.

S403: Broadcast the second optical signal to M receivers, where M is a positive integer greater than 1.

In the communication method provided in this embodiment of this application, an optical coupler couples first optical signals sent by the transmitters into one second optical signal, and broadcasts the second optical signal to the M receivers. In this way, communication between the N transmitters and the M receivers is implemented. In this way, communication between the transmitter and the receiver can be implemented without performing optical-to-electrical conversion processing, and a communication delay can be effectively reduced in comparison with a switch.

It may be clearly understood by a person skilled in the art that, for the purpose of convenient and brief description, for specific steps and effects of the communication methods described in FIG. 13 and FIG. 14, reference may be made to corresponding processes and effects in the foregoing embodiments of the communication system and the embodiments of the optical coupler. Details are not described herein again.

FIG. 15 is a schematic diagram of a structure of a communication apparatus 50 according to an embodiment of this application. As shown in FIG. 15, the communication apparatus 50 includes a receiving module 501, configured to receive one first optical signal sent by each of N transmitters, where N is a positive integer greater than 1. The coupling module 502 is configured to couple N first optical signals sent by the N transmitters into one second optical signal. The sending module 503 is configured to broadcast the second optical signal to M receivers, where M is a positive integer greater than 1.

In the communication apparatus provided in this embodiment of this application, the coupling module couples the N first optical signals received by the receiving module into one second optical signal, and the sending module broadcasts the second optical signal to the M receivers. In this way, communication between the N transmitters and the M receivers is implemented. In this way, communication between the transmitter and the receiver can be implemented without performing optical-to-electrical conversion processing, and a communication delay can be effectively reduced in comparison with a switch.

The embodiments of the communication system, the optical coupler, the communication method, and the communication apparatus provided in the foregoing embodiments have a same concept. For a specific implementation process thereof, refer to the method embodiments. A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like. In this application, terms "first" and "second" are merely used for description, but cannot be understood as an indication or implication of relative importance. A term "a positive integer greater than 1" means at least two. A term "a plurality of" means two or more, unless otherwise expressly limited. "For A, refer to B" means that A is the same as B, or A is a simple variant of B. A term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. The foregoing descriptions are merely optional embodiments of this application, but are not intended to limit this application. Any modification, equivalent replacement, or improvement made without departing from the spirit and principle of this application should fall within the protection scope of this application.

## Claims

1. A communication system, wherein the communication system comprises:
N transmitters, M receivers, and an optical coupler, wherein both N and M are positive integers greater than 1, wherein
each of the N transmitters is configured to send one first optical signal to the optical coupler;
the optical coupler is configured to couple N first optical signals sent by the N transmitters into one second optical signal, and broadcast the second optical signal to the M receivers; and
each of the M receivers is configured to receive the second optical signal sent by the optical coupler, and demodulate the second optical signal.

2. The communication system according to claim 1, wherein the optical coupler is an N×M optical coupler comprising N input ports and M output ports.

3. The communication system according to claim 1, wherein the optical coupler comprises: an N×1 optical subcoupler comprising N input ports and one output port and a 1×M optical subcoupler comprising one input port and M output ports, and the output port of the N×1 optical subcoupler is connected to the input port of the 1×M optical subcoupler.

4. The communication system according to claim 1, wherein the optical coupler comprises: T S×1 optical subcouplers comprising S input ports and one output port, one T×1 optical subcoupler comprising T input ports and one output port, one 1×Q optical subcoupler comprising one input port and Q output ports, and Q 1×P optical subcouplers comprising one input port and P output ports, T, S, Q, and P are all positive integers, N=S×T, and M=Q×P, wherein
output ports of the T S×1 optical subcouplers are respectively connected to the T input ports of the T×1 optical subcoupler, the output port of the T×1 optical subcoupler is connected to the input port of the 1×Q optical subcoupler, and the Q output ports of the 1×Q optical subcoupler are respectively connected to input ports of the Q 1×P optical subcouplers.

5. The communication system according to any one of claims 1 to 4, wherein the communication system further comprises a first light source pool shared by the N transmitters, and each of the transmitters is further configured to perform modulation using an optical signal provided by the first light source pool, to obtain the first optical signal.

6. The communication system according to any one of claims 1 to 5, wherein the communication system is a coherent communication system, and the communication system further comprises a second light source pool shared by the M receivers; and
each of the receivers is further configured to perform signal demodulation on the second optical signal using an optical signal provided by the second light source pool.

7. The communication system according to any one of claims 1 to 6, wherein the communication system is a direct modulation direct detection system, and wavelengths of the first optical signals sent by the N transmitters are different from each other; or the N first optical signals are all wide-spectrum optical signals.

8. The communication system according to any one of claims 1 to 7, wherein original data carried in first optical signals sent by different transmitters in the N transmitters respectively corresponds to different electrical physical resources; and each of the receivers is configured to obtain, from original data carried in the second optical signal, original data corresponding to an electrical physical resource corresponding to the receiver.

9. The communication system according to claim 8, wherein the electrical physical resource is a subcarrier, the original data is a digital signal, and each of the transmitters is further configured to generate, after mapping the digital signal to a subcarrier corresponding to the transmitter, the first optical signal based on an analog signal converted from the digital signal mapped to the subcarrier, wherein subcarriers corresponding to different transmitters in the N transmitters are different, and any two subcarriers are orthogonal; and
each of the receivers is further configured to convert the second optical signal into an analog signal, convert the analog signal into a digital signal, and obtain a digital signal on a subcarrier corresponding to the receiver.

10. The communication system according to claim 8, wherein the electrical physical resource is a spreading code, the original data is a digital signal, and each of the transmitters is further configured to encode the digital signal into a spreading digital signal using a spreading code corresponding to the transmitter, and generate the first optical signal based on an analog signal converted from the spreading digital signal, wherein spreading codes corresponding to the N transmitters are different, and any two spreading codes are orthogonal; and
each of the receivers is further configured to convert the second optical signal into an analog signal, convert the analog signal into a digital signal, and decode, using a spreading code corresponding to the receiver, the digital signal obtained through conversion to obtain a decoded digital signal.

11. The communication system according to any one of claims 1 to 10, wherein the communication system is an in-vehicle communication system, a data center system, an internet of things system, or an industrial interconnection system.

12. An optical coupler, comprising:
a coupling structure, wherein the coupling structure is configured to be connected to N transmitters through an optical fiber, and the coupling structure is configured to couple N first optical signals sent by the N transmitters into one second optical signal, wherein N is a positive integer greater than 1; and
a broadcast structure, wherein the broadcast structure is configured to be connected to M receivers through an optical fiber, and the broadcast structure is configured to broadcast the second optical signal to the M receivers, wherein M is a positive integer greater than 1.

13. The optical coupler according to claim 12, wherein the optical coupler is an N×M optical coupler comprising N input ports and M output ports.

14. The optical coupler according to claim 12, wherein the coupling structure is an N×1 optical subcoupler comprising N input ports and one output port;
the broadcast structure is a 1×M optical subcoupler comprising one input port and M output ports; and
the output port of the N×1 optical subcoupler is connected to the input port of the 1×M optical subcoupler.

15. The optical coupler according to claim 12, wherein the coupling structure comprises: T S×1 optical subcouplers comprising S input ports and one output port, and one T×1 optical subcoupler comprising T input ports and one output port;
the broadcast structure comprises one 1×Q optical subcoupler comprising one input port and Q output ports, and Q 1×P optical subcouplers comprising one input port and P output ports; and
T, S, Q, and P are all positive integers, N=S×T, M=Q×P, output ports of the T S×1 optical subcouplers are respectively connected to the T input ports of the T×1 optical subcoupler, the output port of the T×1 optical subcoupler is connected to the input port of the 1×Q optical subcoupler, and the Q output ports of the 1×Q optical subcoupler are respectively connected to input ports of the Q 1×P optical subcouplers.

16. The optical coupler according to claim 14 or 15, wherein an optical amplifier is connected in series between at least one pair of connected optical subcouplers.

17. The optical coupler according to claim 16, wherein the optical amplifier is a Raman amplifier, an erbium-doped fiber amplifier EDFA, a silicon optical amplifier, or an optical fiber amplifier.

18. The optical coupler according to any one of claims 12 to 17, wherein the optical coupler is a passive optical coupler.

19. A communication method, comprising:
sending, by each of N transmitters, one first optical signal to an optical coupler, wherein N is a positive integer greater than 1;
coupling, by the optical coupler, N first optical signals sent by the N transmitters into one second optical signal, and broadcasting the second optical signal to M receivers, wherein M is a positive integer greater than 1; and
demodulating, by each of the M receivers, the second optical signal after receiving the second optical signal sent by the optical coupler.

20. The communication method according to claim 19, wherein the method further comprises:
performing, by each of the transmitters, modulation using an optical signal provided by a first light source pool, to obtain the first optical signal, wherein the first light source pool is a light source pool shared by the N transmitters.

21. The communication method according to claim 19 or 20, wherein the demodulating the second optical signal comprises: performing, by each of the receivers, signal demodulation on the second optical signal using an optical signal provided by a second light source pool, wherein the second light source pool is a light source pool shared by the M receivers.

22. The communication method according to any one of claims 19 to 21, wherein each of the transmitters obtains the first optical signal by performing intensity modulation on an optical signal; and
wavelengths of first optical signals sent by the N transmitters are different from each other; or the N first optical signals are all wide-spectrum optical signals.

23. The communication method according to any one of claims 19 to 22, wherein original data carried in first optical signals sent by different transmitters in the N transmitters respectively corresponds to different electrical physical resources; and the demodulating the second optical signal comprises: obtaining, by each of the receivers from original data carried in the second optical signal, original data corresponding to an electrical physical resource corresponding to the receiver.

24. The communication method according to claim 23, wherein the electrical physical resource is a subcarrier, the original data is a digital signal, and the method further comprises:
generating, by each of the transmitters after mapping the digital signal to a subcarrier corresponding to the transmitter, the first optical signal based on an analog signal converted from the digital signal mapped to the subcarrier, wherein subcarriers corresponding to different transmitters in the N transmitters are different, and any two subcarriers are orthogonal; and
the obtaining, by each of the receivers from original data carried in the second optical signal, original data corresponding to an electrical physical resource corresponding to the receiver comprises: converting, by each of the receivers, the second optical signal into an analog signal, converting the analog signal into a digital signal, and obtaining a digital signal on a subcarrier corresponding to the receiver.

25. The communication method according to claim 24, wherein the electrical physical resource is a spreading code, the original data is a digital signal, and the method further comprises:
encoding, by the transmitter, the digital signal into a spreading digital signal using a spreading code corresponding to the transmitter, and generating the first optical signal based on an analog signal converted from the spreading digital signal, wherein spreading codes corresponding to the N transmitters are different, and any two spreading codes are orthogonal; and
the obtaining, by each of the receivers from original data carried in the second optical signal, original data corresponding to an electrical physical resource corresponding to the receiver comprises:
converting, by each of the receivers, the second optical signal into an analog signal, converting the analog signal into a digital signal, and decoding, using a spreading code corresponding to the receiver, the digital signal obtained through conversion to obtain a decoded digital signal.

26. A communication method, wherein the communication method comprises:
receiving one first optical signal sent by each of N transmitters, wherein N is a positive integer greater than 1;
coupling N first optical signals sent by the N transmitters into one second optical signal; and
broadcasting the second optical signal to M receivers, wherein M is a positive integer greater than 1.
